# FASCICULE DE BREVET EUROPEEN

(11) **EP 2 597 002 B1**
(45) Date de publication et mention de la délivrance du brevet: **16.08.2017**
(21) Numéro de dépôt: 12193231.3
(22) Date de dépôt: 19.11.2012
(51) Int. Cl.: B60T 7/12, B60T 8/17, B60T 8/172, B60T 8/1755, B60T 8/24, B60T 8/26, B60T 8/32, B60T 8/50, B64C 25/42, B64C 25/44, B64C 25/46

(54) **Procédé de gestion du freinage d'un aéronef permettant de limiter son tangage**
Verfahren zum Steuern das Bremsen eines gelandeten Flugzeugs zur Reduzierung seines Gierwinkels.
Braking control method for landed airplane, aiming to optimise its pitching anle.

(30) Priorité: 22.11.2011 FR 1160663
(43) Date de publication de la demande: 29.05.2013
(73) Titulaire: Safran Landing Systems, 78140 Vélizy-Villacoublay (FR)
(72) Inventeur: Benmoussa, Michael, 78140 Velizy-Villacoublay (FR)
(74) Mandataire: Parzy, Benjamin Alain

(56) Documents cités:
- EP-A1- 1 496 413
- EP-A1- 1 759 989
- EP-A1- 1 834 875
- WO-A1-85/03367
- FR-A1- 2 929 242

## Description

L'invention concerne un procédé de gestion du freinage d'un aéronef permettant de limiter son tangage.

Un tel procédé est connu par le document FR 2 929 242 A1.

### ARRIERE-PLAN DE L'INVENTION

La plupart des aéronefs comportent plusieurs atterrisseurs dont les fonctions essentielles sont d'une part, d'absorber une grande partie de l'énergie cinétique due à la composante verticale de la vitesse de l'aéronef à l'atterrissage, et d'autre part, de permettre à l'aéronef d'évoluer au sol, en particulier pendant la phase de freinage dont il est question dans la présente invention.

On distingue généralement des atterrisseurs dits principaux, qui supportent l'essentiel du poids de l'aéronef, et des atterrisseurs dits auxiliaires, qui permettent d'équilibrer l'aéronef au sol et de faciliter sa manoeuvrabilité. Sur la plupart des aéronefs modernes, les atterrisseurs principaux sont situés à proximité du centre de gravité de l'avion sous la voilure ou sous le fuselage et les atterrisseurs auxiliaires sont situés sous le nez de l'aéronef.

Les atterrisseurs comportent généralement un amortisseur qui absorbe l'énergie à l'impact de l'avion au sol et assure le confort des passagers pendant le roulage, au moins une roue et des éléments de freinage, ceux-ci étant le plus souvent montés uniquement sur les atterrisseurs dits principaux.

Les systèmes de freinage pour aéronefs comportent des actionneurs de freinage (hydraulique ou électromécaniques) commandés pour appliquer aux roues de l'aéronef un couple de freinage tendant à ralentir celui-ci.

La plupart des commandes de frein connues en aéronautique utilisent une consigne en général de couple, d'effort ou de position, qui est traduite soit en une pression dans le cas des freins hydrauliques, soit en un effort à appliquer ou un déplacement du poussoir dans le cas de freins à actionneurs électromécaniques.

Au début d'un freinage, la décélération créée par l'effort de freinage induit une force d'inertie au niveau des roues qui provoque un basculement de l'aéronef vers l'avant autour d'un axe dit de tangage de l'aéronef. Ce basculement a pour conséquence une compression de l'amortisseur de l'atterrisseur auxiliaire.

A la fin du freinage, au moment de l'arrêt complet de l'aéronef, une détente de l'amortisseur de l'atterrisseur auxiliaire génère un second basculement de l'aéronef, cette fois de l'avant vers l'arrière autour de l'axe de tangage.

Ces basculements sont des phénomènes particulièrement inconfortables pour les passagers de l'avion.

### OBJET DE L'INVENTION

L'invention a pour objet un procédé de gestion du freinage d'un aéronef permettant d'améliorer le confort des passagers de l'aéronef.

### BREVE DESCRIPTION DE L'INVENTION

En vue de la réalisation de ce but, on propose un procédé de gestion du freinage d'un aéronef comportant au moins un frein commandable pour freiner l'aéronef lorsque l'aéronef est au sol en fonction d'une consigne de freinage. Selon l'invention, le procédé de gestion du freinage comporte une correction de la consigne de freinage en fonction d'un angle de tangage de l'aéronef lors du freinage.

Ainsi, en réduisant la consigne de freinage lorsqu'un tangage de l'aéronef est détecté, on limite les basculements de l'aéronef de l'avant vers l'arrière ou de l'arrière vers l'avant, améliorant ainsi le confort des passagers.

### BREVE DESCRIPTION DES DESSINS

L'invention sera mieux comprise à la lumière de la description qui suit en référence aux figures des dessins annexés parmi lesquelles :
- la figure 1 est une vue de côté schématique d'un aéronef lors d'un freinage à la suite d'un atterrissage, le profil en trait plein correspondant à l'aéronef non freiné, et les profils en pointillés correspondant à l'aéronef en début et en fin de freinage,
- la figure 2 est un schéma de principe illustrant un mode particulier de mise en oeuvre du procédé de gestion du freinage de l'invention,
- les figures 3, 4 et 5 sont des courbes illustrant les performances de réduction de tangage obtenues par l'application du procédé de gestion du freinage de l'invention.

### DESCRIPTION DETAILLEE DE L'INVENTION

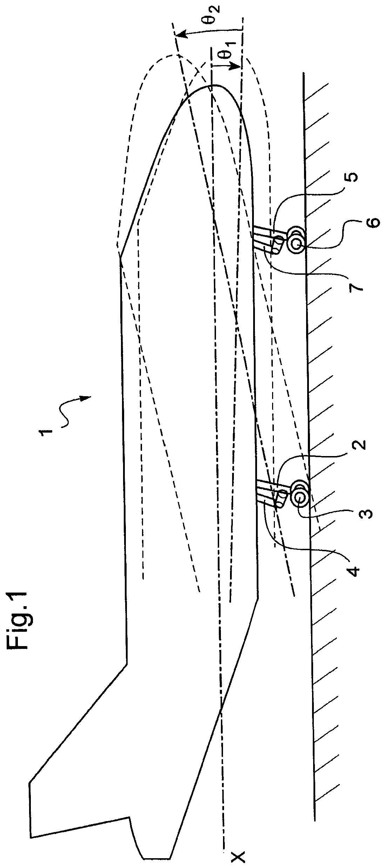

En référence à la figure 1, un aéronef 1 comporte un atterrisseur principal 2 muni d'un ensemble de roues 3 et d'un amortisseur 4, et un atterrisseur auxiliaire 5 muni d'un ensemble de roues 6 et d'un amortisseur 7. Seules les roues 3 de l'atterrisseur principal 2 sont munies de freins.

On définit un axe X, communément appelé référence longitudinale de l'aéronef. Lorsque l'aéronef 1 est immobile au sol, la référence longitudinale X est sensiblement parallèle au sol.

Au début d'un freinage, un premier basculement de l'aéronef 1 d'un angle θ₁ se produit, lors duquel le nez de l'appareil s'enfonce.

A la fin du freinage, un second basculement de l'aéronef 1 d'un angle θ₂ se produit dans un sens opposé.

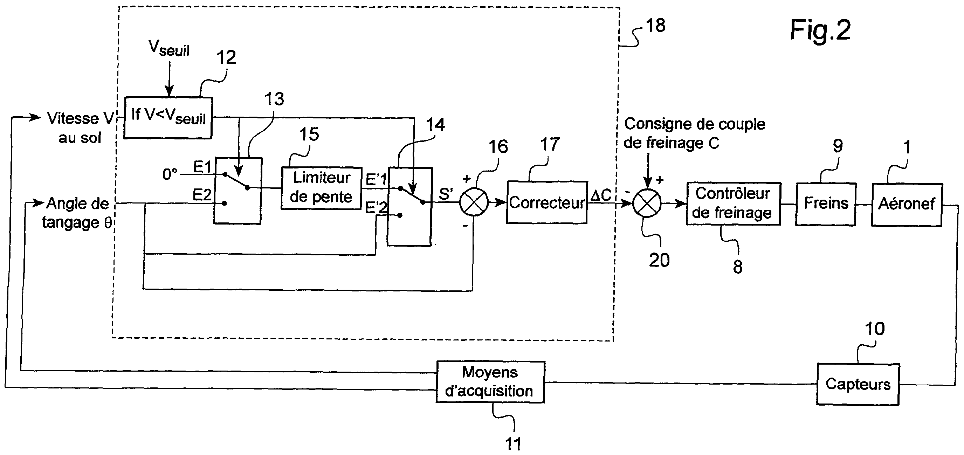

Le procédé de gestion du freinage de l'invention schématiquement représenté à la figure 2 est particulièrement adapté à traiter le second basculement de l'aéronef d'un angle θ₂ qui sera ici nommé basculement retour.

Comme cela a été indiqué plus tôt, ce basculement retour θ₂ s'effectue en fin de freinage, au moment où une vitesse V au sol de l'aéronef 1 est relativement faible. Le procédé de gestion du freinage de l'invention prévoit de rendre active une fonction de correction de freinage uniquement si la vitesse V au sol de l'aéronef 1 est inférieur à une vitesse V_{seuil.}

La fonction de correction de freinage est implémentée par exemple dans un calculateur de freinage de l'aéronef. Elle vise à corriger une consigne de freinage, ici une consigne C de couple, en estimant un couple de correction ΔC de la consigne de couple de freinage C en fonction de l'angle de tangage θ, en vue de réduire l'angle de basculement retour θ₂ ainsi que sa vitesse de variation (appelée plus loin « taux de tangage retour »).

Ceci est maintenant expliqué plus en détail en référence à la figure 2.

Les freins 9 des roues 3 de l'atterrisseur principal 2 sont commandés par un contrôleur 8 selon une consigne de freinage pour ralentir l'aéronef 1 de sorte que sa vitesse V au sol devienne sensiblement nulle en fin de freinage. La façon dont la consigne de couple C est générée est bien connue et ne fait pas partie de l'invention. Le contrôleur 8 est par exemple un EMAC (pour Electromechanical Actuator Controller) si les freins sont de type électromécanique, ou un bloc hydraulique muni d'une servovalve, si les freins sont de type hydraulique. Des mesures de valeurs de plusieurs paramètres représentatifs d'un état de l'aéronef 1 sont réalisées par des capteurs 10 et acquises par des moyens d'acquisition 11, lesdits capteurs 10 et moyens d'acquisition 11 pouvant être intégrés à un système comportant notamment une centrale inertielle. Parmi ces paramètres, on trouve généralement la vitesse V au sol de l'aéronef ainsi que des accélérations et des angles de roulis, de lacet et tangage θ.

La fonction de correction de freinage est ici représentée par plusieurs blocs fonctionnels, parmi lesquels :
- un comparateur de vitesse 12,
- une première bascule 13 à deux entrées E1 et E2 et une sortie S et une deuxième bascule 14 à deux entrées E'1 et E'2 et une sortie S',
- un limiteur de pente 15,
- un différenciateur 16,
- un correcteur 17.

L'ensemble de ces blocs fonctionnels est intégré dans un bloc fonctionnel qu'on nommera «bloc de correction de freinage » 18.

Le bloc de correction de freinage 18 a pour entrées la vitesse V au sol de l'aéronef 1 ainsi que la valeur de l'angle de tangage θ mesuré.

Au sein du bloc de correction de freinage 18, le comparateur de vitesse 12 acquiert la vitesse V au sol de l'aéronef 1 et commande les bascules 13, 14 en fonction de la valeur de cette vitesse V relativement à une valeur constante Vₛₑᵤᵢₗ.

Pour la mise en oeuvre du procédé de gestion du freinage décrite ici, la valeur choisie pour Vₛₑᵤᵢₗ est 3 m/s.

Les blocs 12, 13, 14, 15, 17 et le différenciateur 16 sont agencés à au sein du bloc de traitement de tangage 18 de la façon suivante :
- l'entrée E1 de la première bascule 13 a pour valeur un angle de 0°,
- l'entrée E2 de la première bascule 13 a pour valeur l'angle de tangage θ,
- la sortie S de la première bascule est reliée à l'entrée E1 si la vitesse V est inférieure à Vₛₑᵤᵢₗ, à l'entrée E2 si la vitesse V est supérieure ou égale à Vₛₑᵤᵢₗ,

- l'entrée du limiteur de pente 15 est reliée à la sortie S de la première bascule 13,
- la sortie du limiteur de pente est reliée à l'entrée E'1 de la deuxième bascule 14,
- la valeur de l'entrée E'2 de la deuxième bascule 14 a pour valeur l'angle de tangage θ,
- la valeur de la sortie S' de la deuxième bascule 14 est reliée à l'entrée E'1 si la vitesse V au sol est inférieure à Vₛₑᵤᵢₗ, à l'entrée E'2 si la vitesse V au sol est supérieure ou égale à Vₛₑᵤᵢₗ,
- le différenciateur 16 soustrait à la valeur de la sortie S' de la deuxième bascule 14 la valeur de l'angle de tangage θ, et transmet la valeur obtenue au correcteur 17,
- le correcteur 17 génère alors la valeur de couple de correction ΔC qui sera retranchée à la consigne de couple de freinage C.

Ainsi, lorsque la vitesse V au sol de l'aéronef est supérieure ou égale à Vₛₑᵤᵢₗ, le soustracteur 16 soustrait la valeur de l'angle de tangage θ à elle-même, le correcteur 17 reçoit donc une valeur d'angle de 0° et génère alors une valeur de couple de correction ΔC nulle.

Lorsque la vitesse V devient inférieure à Vₛₑᵤᵢₗ, la valeur de la sortie S de la première bascule 13 devient égale à 0° et la sortie S' de la deuxième bascule 14 prend la valeur de la sortie du limiteur de pente 15 ; ainsi, en fonction de l'angle de tangage θ et de la vitesse V, le contrôleur génère une valeur de couple de correction ΔC non nulle.

Le couple de correction ΔC est alors retranché par un différenciateur 20 à la consigne de couple de freinage C, de sorte que l'intensité du freinage est légèrement et progressivement réduite jusqu'à l'arrêt total de l'aéronef.

Le limiteur de pente 15 permet d'éviter que le correcteur 17 ne génère une valeur de couple de correction ΔC qui tendrait à faire passer brusquement l'angle de tangage θ de sa valeur à 0°, ce qui occasionnerait une variation trop rapide de la consigne de couple de freinage C. Ainsi, le limiteur de pente 15 génère une pente qui permet de faire passer l'angle de tangage θ à 0° en partant de sa valeur lorsque la vitesse V est égale à Vₛₑᵤᵢₗ en un temps raisonnable, ce qui permet de réduire progressivement le freinage pour diminuer progressivement l'angle de tangage θ.

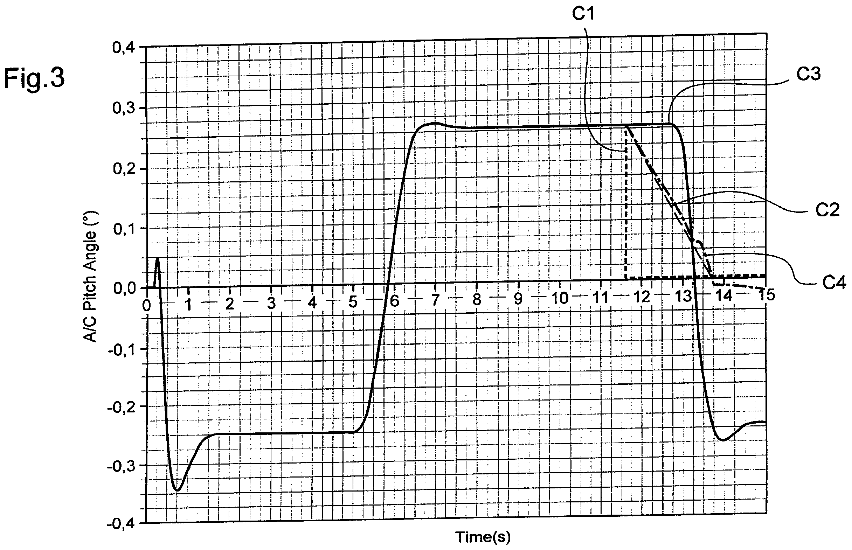

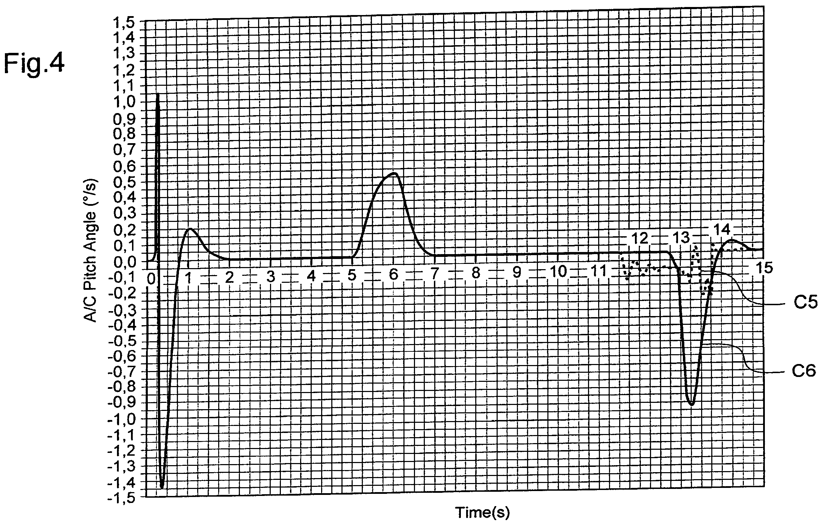

Les courbes des figures 3 et 4 présentent des résultats d'une simulation d'un freinage et permettent d'apprécier les performances du procédé de gestion du freinage de l'invention. L'aéronef objet de la simulation est un avion de type commercial monocouloir. Un aéronef en roulage sans freinage à la vitesse de 15 m/s est tout d'abord simulé pendant les 5 premières secondes. Puis, une commande de freinage est appliquée afin de créer une décélération constante d'environ 2 m/s² jusqu'à l'arrêt de l'aéronef.

La figure 3 représente l'évolution de la valeur de l'angle de tangage θ (l'axe des ordonnées est gradué en degrés) en fonction du temps (l'axe des abscisses est gradué en secondes).

Sur cette figure 3 :
- la courbe C1 représente la valeur de la sortie S de la première bascule 13,
- la courbe C2 représente la sortie du limiteur de pente 15,
- la courbe C3 représente la valeur de l'angle de tangage de l'aéronef 1 sans application du procédé de gestion du freinage de l'invention,
- la courbe C4 représente la valeur de l'angle de tangage de l'aéronef 1 avec application du procédé de gestion du freinage de l'invention.

La courbe C2 représente donc la variation de l'angle de tangage θ que vise à obtenir le procédé de gestion du freinage; cette pente, qui tend à faire passer l'angle de tangage d'environ 0.25° à environ 0° en environ 2 s, représente une variation moins brutale que celle représentée par la courbe C1. L'évolution de l'angle de tangage θ de l'aéronef 1 simulé résultant de l'application du procédé de gestion du freinage est représentée par la courbe C4. Cette évolution, très proche de celle de la courbe C2, est d'une part moins brutale que l'évolution de l'angle de tangage θ représentée par la courbe C3, et d'autre part, elle s'étend jusqu'à un basculement retour θ₂ d'amplitude beaucoup plus faible que celui de la courbe C4 (≈ 0,025° au lieu de ≈ 0,25°).

La figure 4 représente l'évolution du taux de tangage (l'axe des ordonnées est gradué en degrés/seconde) en fonction du temps (l'axe des abscisses est gradué en secondes). Le taux de tangage représente une vitesse de variation de l'angle de tangage θ, soit la vitesse de basculement: plus celle-ci est importante, plus l'inconfort pour les passagers est important. La courbe C5 représente l'évolution du taux de tangage lorsque le procédé de gestion du freinage de l'invention est appliqué, alors que la courbe C6 représente l'évolution du taux de tangage lorsque le procédé de gestion du freinage de l'invention n'est pas appliqué. Il est visible qu'en fin de freinage, le taux de tangage est environ cinq fois plus important lorsque le procédé de gestion du freinage n'est pas appliqué.

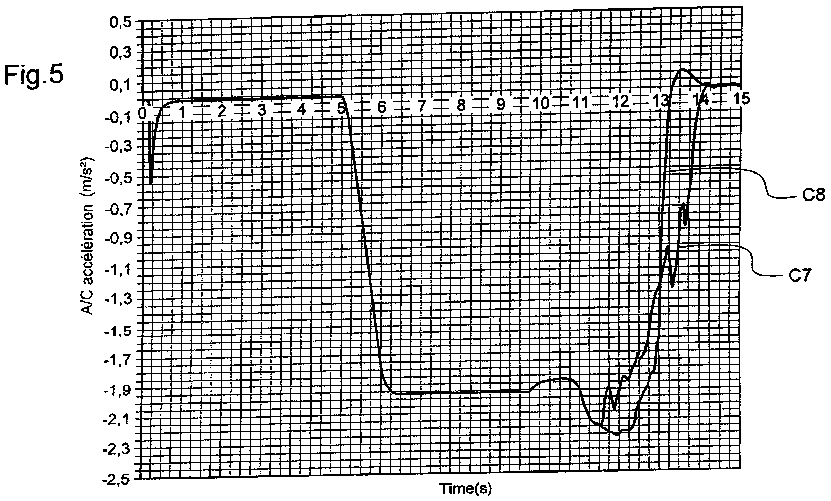

La figure 5 représente l'évolution de l'accélération longitudinale (selon l'axe X) de l'aéronef (l'axe des ordonnées est gradué en mètres/seconde²) en fonction du temps (l'axe des abscisses est gradué en secondes). La courbe C7 représente l'évolution de l'accélération de l'aéronef lorsque le procédé de gestion du freinage de l'invention est appliqué, alors que la courbe C8 représente l'évolution de l'accélération de l'aéronef lorsque le procédé de gestion du freinage de l'invention n'est pas appliqué. En fin de freinage, l'accélération devient légèrement positive lorsque le procédé de gestion du freinage n'est pas appliqué, ce qui correspond au basculement de l'aéronef de l'avant vers l'arrière. Lorsque le procédé est appliqué, l'accélération reste négative jusqu'à l'arrêt de l'aéronef, le basculement ne se produit plus.

Il est intéressant de noter que l'augmentation d'une distance de freinage induite par l'utilisation du procédé de gestion du freinage de l'invention est relativement faible (inférieure à 1 mètre dans cette simulation).

L'invention n'est pas limitée au mode de réalisation particulier qui vient d'être décrit, mais, bien au contraire, couvre toute variante entrant dans le cadre de l'invention tel que défini par les revendications.

On voit sur les figures 3 et 4 que l'angle de tangage et le taux de tangage ne sont pas modifiés au début du freinage. En effet, dans le mode de réalisation de l'invention décrit ici, on applique le traitement du tangage uniquement à basse vitesse (V< Vₛₑᵤᵢₗ), ce qui ne réduit pas le basculement d'avant en arrière ressenti en début de freinage. Il est bien évidemment possible d'appliquer le traitement du tangage quelque soit la vitesse au sol de l'aéronef.

L'ensemble des valeurs numériques fournies dans le texte de la description ou sur les figures le sont à titre d'exemple, l'invention pouvant être mise oeuvre avec des valeurs différentes, notamment pour la valeur de Vₛₑᵤᵢₗ et pour celle de la pente fournie par le limiteur de pente.

En remplacement ou en complément du limiteur de pente de l'angle de tangage, on pourra utiliser un limiteur de la correction de couple à retrancher à la consigne de freinage, le but étant de restreindre la variation de la correction de la consigne.

L'invention s'applique évidemment à des procédés de gestion du freinage dans lesquels la commande des actionneurs de freins n'est pas une commande en couple mais en effort, en position, ou selon tout autre paramètre physique.

## Revendications

1. Procédé de gestion du freinage d'un aéronef (1) comportant au moins un frein (9) commandable pour freiner l'aéronef (1) lorsque l'aéronef (1) est au sol en fonction d'une consigne de freinage (C), le procédé comportant une correction de la consigne de freinage en fonction d'un angle de tangage (θ) de l'aéronef (1) lors du freinage, **caractérisé en ce que** ladite correction est effectuée en retranchant à la consigne de freinage une valeur de correction qui est :
- calculée en fonction de l'angle de tangage (θ) si l'aéronef (1) roule à une vitesse au sol (V) inférieure à un seuil de vitesse (Vₛₑᵤᵢₗ),
- fixée à zéro si la vitesse au sol (V) est supérieure ou égale au seuil de vitesse (Vₛₑᵤᵢₗ).

2. Procédé selon la revendication 1, dans lequel la correction de la consigne de freinage comporte une étape de limitation (15) d'une variation de la correction de la consigne.

## Patentansprüche

1. Verfahren zum Steuern der Bremsung eines Luftfahrzeugs (1), umfassend mindestens eine Bremse (9), die steuerbar ist, um das Luftfahrzeug (1) in Abhängigkeit von einem Bremssollwert (C) zu bremsen, wenn das Luftfahrzeug (1) am Boden ist, wobei das Verfahren eine Korrektur des Bremssollwertes in Abhängigkeit eines Längsneigungswinkels (θ) des Luftfahrzeugs (1) während der Bremsung umfasst, **dadurch gekennzeichnet, dass** die genannte Korrektur dadurch erfolgt, dass von dem Bremssollwert ein Korrekturwert abgezogen wird, der:
- in Abhängigkeit von dem Längsneigungswinkel (θ) berechnet wird, wenn das Luftfahrzeug (1) mit einer Bodengeschwindigkeit (V) rollt, die kleiner als ein Geschwindigkeitsschwellwert (Vₛₑᵤᵢₗ) ist,
- auf Null festgesetzt wird, wenn die Bodengeschwindigkeit (V) größer oder gleich dem Geschwindigkeitsschwellwert (Vₛₑᵤᵢₗ) ist.

2. Verfahren nach Anspruch 1, bei dem die Korrektur des Bremssollwertes einen Begrenzungsschritt (15) zur Begrenzung einer Veränderung der Korrektur des Sollwertes umfasst.

## Claims

1. A method of managing the braking of an aircraft (1) having at least one controllable brake (9) for braking the aircraft (1) when the aircraft (1) is on the ground and as a function of a braking setpoint (C), the method including correcting the braking setpoint as a function of a pitch angle (θ) of the aircraft (1) during braking, and being **characterized in that** said correction is performed by subtracting a correction value from the braking setpoint, which correction value is:
· calculated as a function of the pitch angle (θ) if the aircraft (1) is running at a ground speed (V) less than a threshold speed (Vₜₕ); and
· set to zero if the ground speed (V) is greater than or equal to the threshold speed (Vₜₕ).

2. A method according to claim 1, wherein the correction of the braking setpoint includes a step (15) of limiting any variation to the correction of the setpoint.
